# EUROPEAN PATENT APPLICATION

(11) **EP 4 697 535 A1**
(43) Date of publication of application: **18.02.2026**
(21) Application number: 24194168.1
(22) Date of filing: 12.08.2024
(51) Int. Cl.: H02J 3/00, H02J 15/00

(54) **ELECTROLYSIS PLANT AND METHOD FOR OPERATING AN ELECTROLYSIS PLANT**

(71) Applicant: Siemens Energy Global GmbH & Co. KG, 81739 München (DE)
(72) Inventor: Loku, Fisnik, 90439 Nürnberg (DE); Bendig, Marvin, 90513 Zirndorf (DE); Buratckii, Artem, 90459 Nürnberg (DE); Schumann, Sven, 91452 Wilhermsdorf (DE)

(57) **Abstract**

Electrolysis plant (1) comprising an electrolyser (3), a transformer unit (21) and a rectifier (15a, 15b), the transformer unit (21) comprises a transformer (9,11) and an autotransformer (19) with respective terminals (43) to the primary side (35) of the transformer (9, 11) and to the grid (25) for receiving power from the grid (25) to supply the electrolyser (3) with electrolysis current. The autotransformer (19) comprises an On-Load-Tap-Changer (29) with a tap switch (S2). A bypass switch (S1) is arranged in parallel to the tap switch (S2) that is enabled to cause a fast through-connection of full available grid voltage at the terminals (43) to the primary side (35) of the transformer (9, 11). The electrolysis plant 1 is enabled to perform a Low-Voltage-Ride-Through (LVRT) operational mode.

The invention is further related to a method for operating an electrolysis plant (1), particularly in a Low-Voltage-Ride-Through (LVRT) operational mode, wherein the electrolysis plant (1) during operation is connected to a grid (25).

## Description

The invention is related to an electrolysis plant comprising an electrolyser and a rectifier. The invention also relates to a method for operating an electrolysis plant connected to a grid, in particular a public grid or an island network.

An electrolysis plant is an electrochemical device that uses electricity, mainly DC current, to convert substances or chemicals provided as an educt via electrolysis processes into products. Corresponding to the variety of different electrochemical electrolysis processes there is also a large variety of electrolysis systems, such as an electrolysis plant water electrolysis and production of Hydrogen.

Hydrogen is nowadays generated from water, for example, by means of a proton exchange membrane (PEM) electrolysis or an alkaline electrolysis. The electrolysis systems use electrical energy to produce hydrogen and oxygen from the water supplied as educt. This electrochemical conversion process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water (H₂O) and gas bubbles (O₂ and H₂) in a two-phase mixture.

Current considerations are to generate valuable materials with excess energy from renewable energy sources in times of plenty of sun and wind, i.e. with above-average solar power or wind power generation. A resource can be hydrogen notably, which is generated by water electrolysis systems. For example, so-called renewable energy gas - also known as "RE gas" - can be produced bases of hydrogen. A renewable gas is a combustible gas that is obtained from renewable sources using electrical energy.

Hydrogen is a particularly environmentally friendly and sustainable energy source. It has the unique potential of realizing energy systems, transportation systems and large parts of chemical industry without CO₂ emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid or an island grid containing renewable power generation units.

In the case of electrolysis carried out on an industrial scale, the direct current is mainly provided via line-commutated rectifiers, but also self-commutated rectifiers can be used.

EP 3 556 905 A1 discloses such a circuit arrangement with an AC to DC electrical supply topology for an electrolyser. for the direct current supply of a plurality of electrolysers arranged in parallel. The circuit arrangement includes a rectifier, which converts an AC voltage on the input side into a first DC voltage on the output side. Each electrolyser is connected in parallel to the output of the rectifier via a converter, in particular a step-down converter, that converts the first direct voltage into a second direct voltage, such that the second direct voltage drops across the electrolyser. Each of the rectifiers, in particular the step-down converter, can be controlled or regulated thereby to adapt the level of its second direct voltage, its output voltage. By using the step-down converters designed to be controllable and/or adjustable for each of the electrolysers, the current flow through each electrolyser can also be adjusted as required when the electrolysers are connected in parallel.

In recent years, the energy generation market has changed significantly. The path inevitably leads away from large power plants to decentralized generators from renewable energy sources - spread across the whole country. In order to be able to operate a stable power grid despite this change, guidelines and standards are enacted and constantly adapted to the current situation.

Particular attention is paid to the so-called dynamic grid support. This property describes the behavior of the generating unit in the event of a grid failure. If it occurs in the public power grid (e.g. through a short-circuit in an overhead line) and causes a short-term voltage-drop or (e.g. due to a lightning strike in a substation) a short-term voltage increase, it must be ensured that that the public power grid remains stable and that there is no large-scale failure. For this to be obtained, basically, three things must be ensured: On the one hand, the generating unit in the event of an error may not switch off and not disconnect, as this behavior would put additional strain on the network and could possibly lead to a chain reaction. On the other hand, there are additional requirements that future systems shall support the grid during the fault by feeding in also capacitive or inductive reactive current, depending on the fault. The feeding of reactive current lowers or raises the mains voltage and thus counteracts the error voltage. As a third requirement that is discussed the systems must return to normal operation within a defined period after the error has ended.

Due to their enormous rotating centrifugal masses, large power plants have a certain self-regulating effect in the event of a fault and have so far ensured that grid faults only rarely lead to blackouts. Until a few years ago, it was therefore still permissible for decentralized generation units such as wind energy or photovoltaic systems to disconnect directly from the grid in the event of a fault and stop feeding.

However, the ever-increasing share of renewable energies has forced a rethink. In 2019, renewable energy accounted for around 42% of total electricity generation in Germany. In addition, there are generators from the field of internal combustion engines such as combined heat and power plants or gas turbines. This fundamental change and the fact that a large part of the energy generation from renewable energy is implemented on the grid side with converters means that decentralized generation units and systems are also required to make their contribution to dynamic grid support, to ensure a stable electricity network. Similar Fault Ride Through (FTR) requirements are also applicable for large consumers that are connected to the grid.

Hence, in case of system perturbations of the electric power network, such as, for instance, a voltage dip, a brownout, an overvoltage condition, or the like, supporting capabilities for stabilizing the electric power network by photovoltaic farms, wind farms and/or the like may not be sufficient to ensure a stable operation of the electric power network alone. In this regard, as outlined before it is considered to provide new requirements and regulation for electrolyzing plants which may make compulsory not only reactive power limit requirements but also injections of reactive current into the electric power network as well that need adjusted solutions on the consumer side.

Moreover, large flexible loads connected to the electric power network, or grid, respectively, in particular electrolysis plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage may differ from a rated value, however, the electrolyzing plant shall stay connected and permanent disconnection shall be avoided.

For this reason, flexible load plants such as large-scale electrolysis plants need to stay connected during a voltage fault and continue their operation after the fault is cleared. For this purpose, the electrolysis plants need to be able to ride through faults and, may, for instance, contribute with specific services that can enhance the grid stability. This Fault-Ride-Through (FRT) requirement therefore is of a particular relevance for the present invention in an undervoltage scenario.

This shows that providing electric power network services such as FRT during fault could allow enabling more installation of large-scale electrolyzing plants resulting in more installed capacities and harmonization with the grid operation. So far, the installed capacities of electrolyzing plants are modest and not exceeding several MW in size, but with the present desire with regard to decarbonization policies in different sectors, large-scale electrolyzing plants are more and more expected to be added to the power supply network in the future. This means that the entire functionality of the Fault Ride Through (FRT) needs to be addressed by the electrolyzing plants as such. In this regard, electric power network operators already have drafted some FRT requirements on the connection with the power supply network.

The FRT requirement may be addressed by an electric converter such as a conventional thyristor-based system providing a common blocking operation mode of the thyristors and the resuming the power supply operation again, once the fault is cleared. The same strategy may be applied by an electric converter based on an IGBT- or SiC-based technology allowing the power supply riding through the fault. Nevertheless, fulfilling these FRT requirements is a big challenge for the electrolysis plant and the converter system.

It is an object of the present invention to provide an electrolysis plant with Fault Ride Through Capability.

This object is solved by an electrolysis plant comprising an electrolyser, a transformer unit and a rectifier, the transformer unit comprises a transformer and an autotransformer with respective terminals to the primary side of the transformer and to the grid for receiving power from the grid to supply the electrolyser with electrolysis current, whereby the autotransformer comprises an On-Load-Tap-Changer with a tap switch and whereby a bypass switch is arranged in parallel to the tap switch that is enabled to cause a through-connection of full available grid voltage at the terminals to the primary side of the transformer.

The grid may be the public electricity grid or an island or isolated electricity network. Hence, according to the invention, the electrolysis plant may be connected to the public grid or an island network in a similar manner. The electrolyser may comprise a plurality of electrolysis cells that are arranged in series connection.

The invention is based already on the consideration that for high-performance electrolysis plants to be connected as consumer particularly to the public grid in future integrated energy systems, hardly any reliable approaches are known to implement a fault ride through capability in an electrolysis system, and, particularly to design and implement additional network support capability in case needed, like fulfilment of reactive power requirements, like cos(φ) ≥ 0,95.

Connecting a large electrolysis plant to the public grid requires compliance with/the fulfilment of the local grid code requirements. Part of these requirements - especially for large plants - is a Fault Ride Through capability (FRT capability). The typical core requirement is to remain fully connected to the grid in case of a temporary voltage dip at the point of connection (Low Voltage Ride Through, LVRT). The grid operator specifies a mandatory curve where the voltage dip is time dependently shown, during which the plant must remain connected. Only longer or deeper voltage dips allow a disconnection of the plant. In addition, grid operators may demand to withstand a limited or unlimited number of such consecutive faults or limit the number by the pre-defined threshold for the integrated power loss during all of these faults. Fulfilling these requirements is a huge challenge for the electrolysis plant operation and its converter system.

According to the electrolysis plant of the invention the transformer unit of the electrolysis plant is equipped with an advantageous circuitry realized within the autotransformer that is branching off the tap switches of the On-Load-Tap-Changer (OLTC). Hence, the approach is to improve and modify the OLTC's electrical design by implementing another switching element, the bypass switch, that is arranged in parallel to the tap switch. The bypass switch when being activated and closed will cause a through-connection of full available grid voltage at the terminals to the primary side of the transformer, while tap switch of the On-Load-Tap-Changer is opened and deactivated.

The circuitry including the advantageous dual-switch arrangement is a controllable circuitry that is equipped with controllable fast acting switches for both the tap switch and the bypass switch. Very short switching times to change switching status from open position (deactivation) to closed position (activation) of a few milliseconds are being observed. With this arrangement a Fault-Ride-Through capability in a temporary undervoltage scenario of the grid is advantageously provided for the electrolysis plant. Hence, in operational mode the voltage supply to the electrolysis plant can be maintained or upheld close to nominal value when the bypass switch is being activated instantaneously in case a voltage drop of the grid voltage is observed. The electrolysis DC-current is still provided by the rectifier and is continued in an adapted way to keep the electrolysis cells in operation. The electrolysis plant is capable to fully stay connected and to produce products from electrolysis process, like Hydrogen in a water electrolysis process while riding through the temporary voltage drop. A "FRT-readyness" is being implemented in the electrolysis plant.

The invention perceived the deficiency that for existing electrolysis plants, up to now no feasible solution is known for the problem to incorporate a robust and reliable Fault-Ride-Through-Capability. Theoretically only, designing a tap changer of a transformer unit in such a way that it can compensate for the voltage drop at the primary side of the transformer, so that the rectifier can still be able to draw the full nominal power from the grid could be possible. However, this would imply that the tap changer must operate in time ranges of several milliseconds. Currently, this is not possible as the on-load tap changers (OLTC) can only operate in ranges of 2.7 - 5 seconds, fast-acting OLTCs can operate in the range of 0.3 seconds, or if it is semiconductor-based tap changer than switching times of some milliseconds could be possible. Though there are no commercially available products available on the market. However, none of the solutions is currently feasible for FTR purposes, since all commercially available tap changers can go tap-by-tap only, which means that typically numerous operations are required to adjust the voltage by several 10% during seconds time frame. Therefore, these solutions would not be able to meet the strict requirements.

Beyond the FRT capability and grid connection requirement the dual-switch circuitry arrangement can be advantageously utilized to provide a continuous DC current and hence a continuation of the sensitive electrochemical process. Usually, the electrochemical process of electrolysis plants does not feature Fault Ride Through capability, especially ramping-up after fault-clearance is challenging and may increase ageing of the system or impact safe operation.

Hence, with the present invention the major technical challenge of the continuation of the electrochemical process downstream the electrolysis in the event of a power outage as a result of a voltage dip in the grid can be solved by activating a through connection path while deactivating and circumventing the OLTC with the tap switch. A continuous and safe operation of the electrolysis plant can be obtained. Should this event occur, the electrolysis process can still resume operation with a reduced load. Since the polarization curve (U-I-characteristic) of the electrolyser is rather flat, it would - in the known electrolysis plant configurations - otherwise react sensitive to even small voltage changes. The electrolysis threshold voltage of the cells and stacks is often in the range of 65 - 85% of the nominal voltage (Nernst voltage). After the fault is cleared, some grid operators demand full or almost full pre-fault power consumption within 1-10 seconds when the voltage has recovered to ~85-90% of nominal voltage, which is a big challenge.

Here, in the electrolysis plant comprising an electrolyser with a plurality of electrolysis cells arranged in series connection, the electrolysis polarization curve is defined as the sum of the individual polarization curves of all cells connected in series in an electrolysis plant. As described above, the curve is rather flat and a small dip in supply voltage might lead to a complete stop of power consumption. To avoid this, the polarization curve of an electrolysis system - in some other approaches - may also be varied in operation by short-circuiting only a part of the cells and hence lowering the voltage demand accordingly for a certain operational DC-current.

Since the electrolysis characteristic is highly dependent on the input voltage, already a slight voltage reduction changes the input power strongly. If the voltage drops below accumulated the Nernst voltage, about 1.23 V per cell for water electrolysis, the gas production and thus electrolysis process would stop completely. As a typical example only, nominal voltage at the begin of life of an electrolyser is at about 980 V, while the threshold for hydrogen production is in the range of 720 V. Should the input voltage drop quickly to 0.73 p.u., no power can be consumed anymore by the electrolysis plant. This leads to massive imbalance between generation and consumption, when several GW of electrolysis capacity would be simultaneously affected in a large grid, while the generation units continue to operate with just slightly reduced power compared to the pre-fault values. In a worst-case scenario the grid operator would not be able to stabilize the grid, resulting in brown- or blackouts of large regions. As a typical practical example, for instance, if the voltage drops by 100 V roughly only about 10% of the electrolysis cells would have to be short-circuited to be able to take up roughly the same amount of DC-current compared to the pre-fault operational mode. In this example, the consumed load of the electrolysis plant would therefore be reduced only by 10% instead of 75%, for typical electrolysis plant.

Since the Nernst-voltage is in the same range, many state of the art electrolysis plants will not be able to reach pre-fault nominal power until the voltage has fully recovered or is balanced again. This might be achieved to some extend by an On-Load-Tap-Changer (OLTC) on any of the upstream transformers, but operating this mechanical switch typically takes 3-5 seconds, which is far too long reaction time to safely bridge a voltage dip and ramp-up fast enough in case the voltage recovery is not sufficient. During this time the electrolysis process might be able to only operate at low part load or not at all. Since some electrolysis plants only start the electrolysis process at 85% voltage, they would see an interruption of power inflow of several seconds, which can entirely stop the process. Especially repetitive faults pose a challenge to the systems, as a numerous turning on and off of the electrochemical process might lead to severe instabilities in the system and finally to a plant trip. In addition, such operation might also impact the ageing of the system negatively.

All these additional hurdles in operational behaviour can be avoided by the electrolysis plant that is equipped according to the present invention. With the present invention a particular important requirement for the grid operator can be addressed, that is a continuous consumption of the load is available after the fault is cleared. Should a large plant - or even worse, multiple large plants - trip in case of short time disturbances within the grid, the grid operator would struggle to balance the power in- and output after fault clearance. The power plants producing the power cannot be adjusted quick enough. Therefore, only a certain power is allowed to trip (to be disconnected) and it is essential for large consumers to remain connected in case of a short-time voltage drop.

The FRT concept implemented in the electrolysis plant of the invention advantageously allows the availability of the electrolysis load after the fault is cleared while the chemical processes can be smoothly continued across the voltage dip without major issues. Both are a very important requirements for the grid operator and the electrolysis plant operator as well.

In an advantageous embodiment the electrolysis plant, the tap switch and the bypass switch both are arranged in a changeover circuitry, such that a commutation of current from the On-Load-Tap-Changer to the through-connection path is implemented.

The coupling and operating of the two switches in a changeover switching arrangement ensures that during operation of the electrolysis plant there is no disconnection of the autotransformer implied with the switching process as such and thus no interruption of the electrolyser is ensured during the Fault-Ride-Through operational mode. In fact, the dual-switch switching process can be performed simultaneously and smoothly within a few milliseconds at most.

In an advantageous embodiment the electrolysis plant comprises a control unit, wherein the control unit is designed to control and operate each of the two switches.

Each of the two switches in the autotransformer can be activated or deactivated individually by a respective control signal that is provided from a central control unit of the electrolysis plant. The control unit is enabled to receive and process real-time data about the grid conditions, in particularly a measure or proportion or other indicator about the active grid voltage. Depending on the voltage conditions the control unit provides as output a control signal to the dual-switch or twin-switch switching arrangement to selectively activate or deactivate the tap switch and the bypass switch individually. This offers a high operational flexibility and adapted approach of the electrolysis plant to operate a FRT event. Usually in the Fault-Ride Through transition both switches - the tap switch and the bypass switch - are controlled and operated complementary, namely by applying a changeover switching logic that is stored in the control unit. However, in principle also other switching schemes are available for implementation depending on the operational conditions of the grid and of the electrolysis plant.

In a particular advantageous embodiment, the electrolysis plant comprises an interface to a grid stabilization equipment that is connected to the control unit and that is enabled for surveillance of the grid voltage at the point of connection to the grid.

With the help of the grid stabilization equipment the control unit can receive and process an "in-situ" input signal about the present grid conditions on the AC-side of the electrolysis plant. This enables the control unit to provide as output a control signal to the switching arrangement to control the status of both tap switch and bypass switch respectively and simultaneously and to change the switching status immediately in case of a voltage drop. The control unit is of a particular relevance to operate the dual-switch circuitry that is integrated in the autotransformer in a controlled manner in view of the up-to-date conditions and surveillance of the grid voltage and to activate or deactivate both switches according to the voltage conditions.

The interface to grid stabilizing equipment that determines grid voltage at the point of connection, enables in combination with the dual-switch arrangement integrated in the transformer unit on the AC-side the full exploitation and adequate use of the electrical energy available in the grid in a Low-Voltage-Ride-Through (LVRT) operational mode. The electrolysis plant operation and the electrochemical processes can be continued seamlessly across LVRT-scenario and the electrolysis plant stays connected and products from electrolysis can be produced, like for example hydrogen production from a PEM-electrolyser or an alkaline electrolyser.

In a further preferred embodiment of the invention, the electrolysis plant comprises a rectifier controller that is connected to the control unit and arranged to process a control signal from the control unit, such that in case of an activation of the through-connection path accompanied with a fast increase of the AC voltage the rectifier is controlled and enabled to counteraction and regulation of the DC voltage provided to the electrolyser.

With this control scheme the rectifier controller is integrated in or coupled with the overlaying control unit so that present grid conditions and/or forecasted grid conditions can be considered for setting or adaption of the operation point of the rectifier. Hence, it is possible for example that during normal operation or during a Fault-Ride-Through scenario the firing angle of a thyristor-based rectifier can be adapted in view of the grid conditions and the DC output voltage adjusted accordingly.

In a further preferred embodiment of the electrolysis plant a control scheme is implemented in the rectifier controller that is adapted to the respective grid voltage increase involved with an activation of the through-connection path. It is recommended to implement a control scheme, a control algorithm or a program in the rectifier controller that is linked to the higher-level control unit. The latter provides control signals and/or status signals to the rectifier controller about the grid conditions. Even if the Fault-Ride-Through operational mode is a fast-switching event, thereby possibly resulting in fast increase of the voltage input of the rectifier, the rectifier controller can then counteract and correspondingly regulate the DC voltage within several milliseconds or even in parallel decrease the firing-angle in anticipation of the voltage increase to a pre-defined value or based on a characteristic voltage curve, like a polarization curve, that is stored in a memory of the rectifier controller. It is then possible in an undervoltage FRT-scenario and activation of the through-connection path in the autotransformer, that the DC-voltage supplied to the electrolyser is not immediately released with an abrupt rise, but rather ramped-up smoothly with a somewhat damped rise of DC-voltage and DC current respectively.

In a further preferred embodiment of the electrolysis plant the tap switch and the bypass switch comprise a fast-acting mechanical switch, a semiconductor switch or a combination of both.

These types of electrical switches demonstrate very short circuit or response time for their activation or deactivation, so that within a few Milliseconds the switching status can be changed. Their application is particularly favourable to comply to the needs of safely operating an electrolysis plant instantaneously through a Fault-Ride-Though (FRT) transition, while complying with the grid requirements.

Preferably in the electrolysis plant the tap switch and/or bypass switch comprises a vacuum circuit breaker (VCB).

A double vacuum circuit breaker is particularly advantageous to realize the dual-switch operation and a changeover switch. Further a safe and reliable switching operation can be provided with a very short switching time.

In another preferred embodiment of the electrolysis plant the rectifier is designed for enabling a bidirectional operational mode, particularly a multilevel-modular-converter (MMC) is provided, and the rectifier being connected to the grid, such that voltage support can be achieved by providing reactive power to the grid.

The voltage source converter (VSC), particularly designed as a modular multilevel converter (MMC), is preferably designed for bidirectional operation and is connected to a central network connection point, so that voltage support through reactive power provision for the public power grid can be realized.

Advantageously, further network services for the grid, e.g. the public grid, are also possible, such as the assumption of network functions.

The voltage source converter (VSC) is also preferably designed as an IGBT-based converter architecture which is capable to fed electrical power from the supply line into the grid as required. Possible architectures include modular multilevel converter, active front ends, and so on. This is a special and advantageous form of bidirectional operation of the electrolyser plant.

This allows to implement in addition the advantageous possible option to store access power provided from the grid in a respective DC-based storage unit that can be connected on the DC-side of the electrolysis plant. Hence a storage unit may comprise a battery or a capacity bank that is integrated in the electrolysis plant. The DC storage unit maybe connected via an additional DC-DC converter on the DC-side of the converter that is available. An MMC or other topology therefore optionally can transfer power that is stored in the storage unit from the DC side to the AC side or vice versa, which promotes particularly flexible operation of the electrolysis plant.

Preferably converters are connected that allow a 4-quadrant mode operation. The energy stored inside the capacitors of the converter is usable for grid stabilization services, like for ancillary services, e.g. for fast frequency response requirements. This is advantageous in operational situations where part of the electrolysers in the electrolysis plant are not in operation, like in part load operation or due to partial service shutdown, and the capacitor bank or battery system is not required to discharge electricity and supply the DC-current to an operating electrolyser or electrolyser modules. In case the converter system is used this way, the electrolysis process is preferably disconnected from the capacitor bank. This can be achieved by a mechanical switch or a semi-conductor-based device.

In operation the electrolysis plant is connected to the power grid via the transformer unit, so that when the electrolysis plant is in operation, the electrolyser is supplied with direct current via the rectifier to run the electrolysis process. As outlined before, with the help of the grid stabilization equipment the control unit can receive and process an "in-situ" input signal about the present grid conditions on the AC-side of the electrolysis plant. With the transformer it is also possible to sense any change or instability of the grid voltage of the AC secondary side at the secondary winding of said transformer. There is no need to measure or determine grid voltage directly at the point of connection or at the primary winding of the transformer or at the point of connection of the autotransformer at the terminals to the AC network or AC grid. In any configuration this enables the control unit - in case of a temporary voltage drop - to provide as output a control signal to the tap switch and the bypass switch simultaneously to control their switching and to change the status in case of a voltage drop or a return of the grid voltage.

Another aspect of the invention relates to a method to operate an electrolysis plant that is connected to a grid, like preferably the public grid or an island or isolated electrical network.

In said method for operating an electrolysis plant the electrolysis plant is connected to a grid by means of the transformer unit, wherein AC-voltage from said grid is supplied to the rectifier via a AC-supply line, and wherein during a temporary voltage drop of the grid voltage at the point of connection the electrolysis plant stays connected, whereas the tap switch is opened and the bypass switch is closed such that a through-connection of full available grid voltage at the terminals to the primary side of the transformer is effectuated and electrolysis current maintained in order to keep the electrolyser in operation.

The electrolyser comprises a plurality of electrolysis cells connected in series, that are maintained in operation during a Low-Voltage-Ride-Through (LVRT) event in the grid. With this method for operating the electrolysis plant the power consumption of the electrolysis plant is maintained while being connected to the grid, for instance the public grid, in case of a temporary voltage drop at the point of connection. A continuous operation of the electrolysis is ensured while the Low-Voltage-Ride Through (LVRT) requirements of the grid operator in case of a temporary voltage drop can be fulfilled. The requirement to demonstrate a Fault-Ride-Through capability for a large electrolysis plant while staying connected to the grid and continuously operated is ensured. The advantages of the electrolysis plant that were outlined above are correspondingly applicable for the method for operating the electrolysis plant that is connected to a grid and operated.

In a particularly preferred execution of the method, in case a voltage drop of the grid voltage is detected a Low-Voltage-Ride-Through (LVRT) operational mode is being activated wherein the current path is switched over and commutated from tap switch to bypass switch.

Hence, especially in a LVRT - grid event, a rather short switching time can be realized and an uninterruptible supply of power to the electrolyser ensured.

In another preferred execution of the method the control unit provides a control signal to the rectifier controller that is processed such that in case of an activation of the through-connection path that is accompanied with a fast increase of the AC voltage, the rectifier is controlled and counteracting while the DC voltage provided to the electrolyser is regulated.

Thereby, after activation of the through-connection path in the autotransformer, a smooth ramp-up of DC-voltage and DC electrolysis current is ensured. A well-adapted response to the commutation can be obtained, while the electrolysis plant stays connected and continues operation initially after the switching operation on a moderated but advantageously still a high level, as possible. A smooth ramp-up after the commutation can be controlled by applying a ramp-up procedure, where a linear, a stepwise or a specifically conceived rising function depending on the time after the commutation can be implemented.

This adapted ramp-up phase after activation of the through-connection path is very advantageous to secure the electrolysis cells from fast degradation and damages that would result from an instantaneous uncontrolled passing of the full grid through the autotransformer that would imply high DC current supply immediately. The ramp-up sequence for the DC current that is supplied after commutation act in the dual-switch circuitry can be implemented via control of the DC current output of the rectifier. It would also be possible to have a fast controllable potentiometer circuitry in place for this ramp-up phase.

In a further preferred embodiment of the invention in anticipation of a fast voltage increase the firing angles are decreased in a thyristor-based rectifier to a defined value such that the DC voltage provided to the electrolyser is adapted.

This operational mode is very advantageous in thyristor-based rectifiers. Thereby, a smart voltage regulation of the DC-voltage of the rectifier can be realized within the rectifier controller itself, where an operational scheme is stored in a programmable memory chip. This operational scheme is based for instance on a characteristic voltage curve, like the electrolyser polarization curve, and/or on an adaption of firing-angles depending on the voltage increase that can be expected or is forecasted after the commutation act. A short-term forecast can be derived from the surveillance and of measurement of the grid conditions. With this control scheme a safe, low-strain and continuous transition and operation of the electrolyser is obtained after the commutation act.

In a further preferred execution of the method, in case that after a voltage drop the grid voltage returns the current path is switched over and commutated back from the bypass switch to the tap switch such that in the autotransformer the On-Load-Tap-Changer (OLTC) is operated again.

This enables a return to a normal operation of the electrolysis plant again after the undervoltage grid fault is cleared. In this steady-state or normal operational mode the autotransformer is operated as planned by using the On-Load-Tap-Changer (OLTC) and selecting a tap switch position. The additional connection via the bypass switch is being disconnected, the bypass switch is in open position. No influence on operation from the proposed dual-switch configuration in the transformer unit is expected for this operational mode.

Preferably in the method DC current is reduced in parallel the commutation act or shortly after the commutation act to match power intake after the commutation act of the dual-switch arrangement.

It appears appropriate and useful in a Fault-Ride-Through operational mode for a save and harmless operation to temporarily reduce the DC-current through the electrolysis cells initially after the commutation act and not to switch to full-available voltage and load immediately. Therefore, compared to the pre-fault conditions the DC-current is temporarily reduced and increased smoothly in a ramp-up sequence up to or close to the pre-fault value for example.

Both grid requirement from the operator and save operation objectives of the electrolysis plant can be obtained with this implementation of the method. In the overlaying control unit or in the rectifier controller itself the ramp-up sequence after the commutation act maybe stored or programmed in a memory chip. This scheme might be adapted to the operational mode of the electrolysis plant. Hence, this scheme is advantageously applicable or adaptable both for operation of the autotransformer in the bypass-mode via the closed bypass switch and in the OTLC-mode via the closed tap switch respectively.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: a schematic representation of grid code conditions applicable for a connected or connectable electrolysis plant;
- FIG 2: a schematic diagram showing operating areas of the electrolysis plant with regard to a power supply from an electric power network or public grid;
- FIG 3: an example of electrolysis plant provided with Fault Ride Through capability that is connected to a grid;
- FIG 4: a circuitry of the autotransformer with improved on-Load-Tap-Changer (OLTC)
- FIG 5: a flowchart illustrating a typical Low-Voltage-Ride Through (LVRT) sequence.

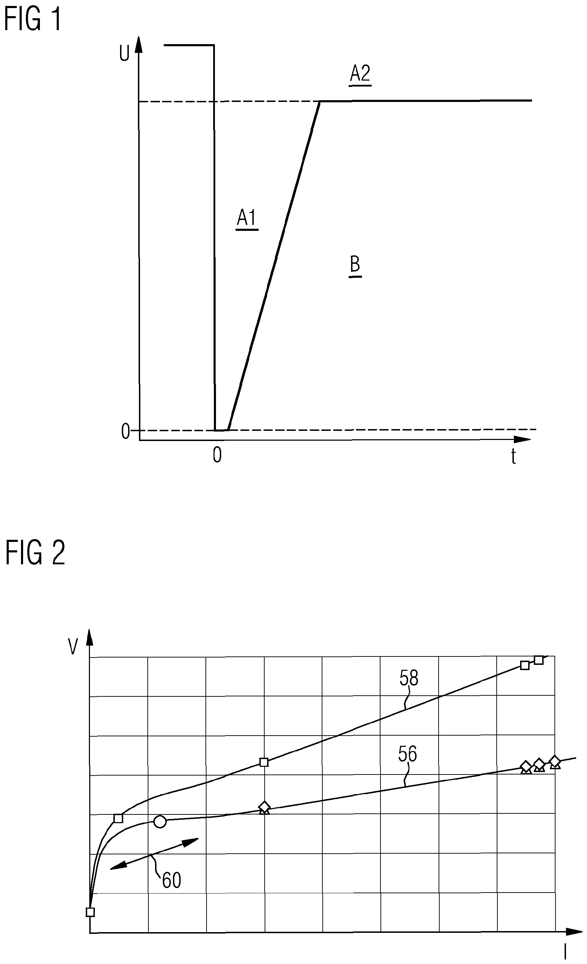

FIG 1 illustrates a schematic representation of typical grid code conditions that are applicable for a connected or connectable electrolysis plant.

The lines represent mandatory boundary conditions that must be complied with by the electrolysis plant, whereby a corresponding, specified switching state must be observed within or above the lines.

Connecting a large electrolysis plant to the public grid requires compliance with/the fulfillment of the local grid code requirements. Also islanded grid may feature similar requirements. Part of these requirements - especially for large plants - is a Fault Ride Through capability. The typical core requirement is to remain fully connected to the grid in case of a temporary voltage dip at the point of connection and to consume the full pre-fault power after a short period after the fault is cleared.)

The grid operator specifies a curve where the voltage drop is time dependently shown, during which the plant must remain connected (Area A1 + A2). Longer or deeper voltage dips allow a disconnection of the plant (Area B). A typical example is shown in FIG 1. Fulfilling this requirement is a huge challenge for the electrolysis plant and its converter system.

In the present example of an undervoltage event, a voltage U compared to the time t is shown in seconds. It has been shown that in the event of a temporary voltage dip, as shown in area A1, a switched-on state of the electrolysis plant should always be maintained. This means the electrolysis plant is required to stay fully connected. However, if this is a sharp voltage dip, for example in the direction of closely down to 0 V, as shown by the lowest dotted line, this switched-on and ready for operation state only needs to be maintained for a rather short time interval. In this example, the time limit of such an error state is about 0.2 seconds. In the case of a lower voltage dip, the time in which the switched state should be maintained increases linearly. Above a specified threshold value, as shown by the top dashed line for the A2 range, the switched state should generally be maintained regardless of the duration of the existing fault state, or the voltage deviation from the setpoint.

However, in case the duration of the fault condition exceeds area A1, as shown in area B, it is generally permitted for the electrolysis plant to be disconnected from the grid, at least for a short time, or in case that the operational mode of the electrolysis plant needs to be changed or stopped for some reasons. If the electrolysis plant meets these limiting conditions, it has grid compatibility and is accordingly "fault ride through" capable or "FRT-Ready".

In addition, grid operators may demand to withstand an unlimited number of consecutive faults, as long as the integrated power loss during all of these faults does not surpass a pre-defined threshold. Alternatively, the number of faults per time may be limited to a reasonable value, e.g. max. 10 faults within 15 min.

In FIG 2 a schematic diagram is provided which shows operating areas of an electrolysis plant with regard to a power supply from the electric power network or public grid. The electrolysis voltage U is depicted versus the electrolysis current I. A graph 56 shows a typical dependency at a begin of life (BoL) of an electrolysis plant, wherein a graph 58 shows the dependency at the end of life (EoL) of the electrolysis plant. The EoL graph 58 is located above the BoL graph 56 and shows a higher increase. Hence a substantially higher voltage is required for EoL operation of an electrolysis plant to result in the same electrolysis current compared to the BoL operation. A double arrow 60 indicates a range of a so-called polarization operation, especially with regard to a grid event like a temporary steep voltage dip in the bending down area illustrated by the double arrow 60. The current I is highly sensitive against voltage changes particularly in and above said bending down area of the polarization curve. A voltage above a threshold is desired to ensure a stable mode of normal electrolysis operation in full load or part load. Furthermore, some minimum voltage needs to be provided to avoid fuel cell mode of the electrolysis cells and to secure the electrolysis cells against damage therefrom (Nernst voltage) .

Important for the grid operator is a fast return to pre-fault conditions of the load after the fault is cleared. Should a large plant trip in case of short time disturbances within the grid (branch dropped into a power line and causes a short-circuit for a short time), the grid operator would struggle to balance the power in- and output after fault clearance. The power plants producing the power cannot be adjusted quick enough. Therefore, only a certain power is allowed to trip and it is essential for large consumers to remain connected in case of a voltage drop. A major challenge is to balance grid operation during the fault. Generation units must fulfill similar requirements as stated above and will continue to provide power, especially when the voltage dip is not too strong, for example in case of a grid fault several 100 km away which might result in a voltage drop down to 0.9 p.u.. At all times, the generation and consumption must be balanced to keep the grid frequency stable, which is also valid during the time of the fault.

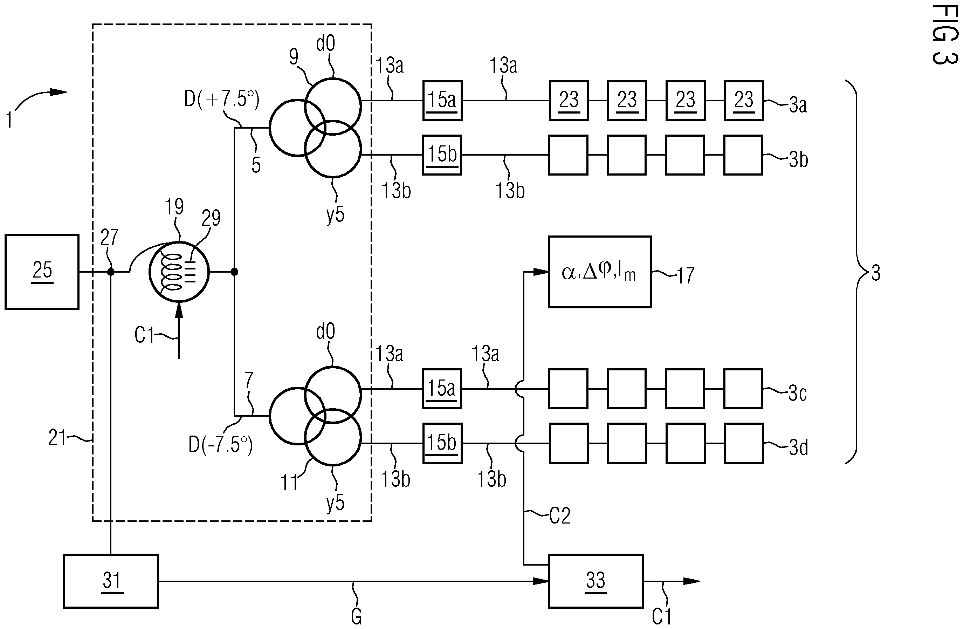

FIG 3 shows an example of an industrial scale electrolysis plant 1 that is enabled for Fault-Ride-Through-Capability and that is connected to an AC electrical grid 25, like for example the public grid. Within the electrolysis plant 1 a circuit arrangement or supply circuitry is realized with certain electrical elements to receive AC electric power from the grid 25 and to supply DC electric power to run the electrolysis process. The circuit arrangement is used to supply DC direct current to several electrolysis rows 3a, 3b, 3c, 3d that are connected in parallel. The electrolysis plant 1 comprises a transformer unit 21, a rectifier 15a, 15b and an electrolyser 3. Each electrolysis row 3a, 3b, 3c, 3d comprises several electrolysis modules 23 that are connected in series. The four electrolysis rows 3a, 3b, 3c, 3d shown in FIG 3 are forming an electrolyser 3 of large scale.

The electrical supply topology of the electrolysis plant 1 has a first supply branch 5 and a second supply branch 7 into which a respective three-phase transformer 9, 11 is connected with its primary side. On the secondary side, two supply lines 13a, 13b each are led out of the three-phase transformers 9, 11, which are connected to the AC input of a respective rectifier 15a, 15b. Consequently, both the first supply branch 5 and the second supply branch 7 are each coupled on the secondary side via corresponding windings of the three-phase transformer 9, 11 with two supply lines 13a, 13b with a respective rectifier 15a, 15b. The supply lines 13a, 13b are led out of the rectifiers 15a, 15b on the output side, so that a direct current is provided during operation to supply the respective connected electrolysis rows 3a, 3b, 3c, 3c of the electrolyser 3.

An adjustment of the phases in supply lines 13a, 13b as well as in the first supply branch 5 and the second supply branch 7, which is upstream on the primary side, can be set and adapted via a rectifier controller 17. On the primary side for example, a phase difference of 15° is set between the first supply branch 5 and the second supply branch 7, whereby the first supply branch 5 is set to a setpoint angle of +7.5° and the second supply branch 7 is set to a target angle of - 7.5° compared to a zero-phase reference value. Furthermore, in each of the supply branches 5, 7 in the supply lines 13a, 13b led out from the secondary side of the three-phase transformers 9, 11, a phase shift of 30° is set with respect to each other. The two secondary systems of the three-phase transformers (d0 and y5) thus also have a phase shift of 30° to each other due to the selected vector group.

The phase shift between D-d0 is set to 0°. This configuration allows for 24-pulse operation for normal operation of the circuit assembly, where the lowest frequency harmonics generated by each rectifier in each branch compensate for each other. The rectifiers 15a, 15b comprise thyristors and in the rectifier controller 17 a rectifier control scheme is implemented or programmed in which the ignition angle α of the thyristor is used as control variable of the rectifier control. In this way, for example, a phase control is advantageously implemented in the rectifier control scheme. Hence, a phase-controlled power regulation of a respective electrolysis series 3a, 3b, 3c, 3d is achieved via the DC current rating at the output of the rectifiers 15a, 15b. The rectifier controller 17 allowed adaption of firing angle α, application of a phase shift Δφ and control and measurement of the DC current Iₘ that is supplied to the electrolysis rows 3a, 3b, 3c, 3d of the electrolyser 3 respectively. The power supply of the electrolysis plant 1 is provided by the circuitry integrated into the electrolysis plant 1, which is equipped with a transformer unit 21 including an autotransformer 19 positioned at the primary side. For power supply purposes, the first supply branch 5 and the second supply branch 7 are led out of the three-phase transformers 9, 11 electrically connected to each other and connected to the autotransformer 19. The autotransformer 19 is connected to an alternating current supply network 25, particularly a public electricity grid, at grid connection point 27 - or POC (Point Of Connection) .

The electrolysis plant 1 is also prepared and improved for example for an operating situation in which no power consumption can take place, especially in one of the supply lines 5, 7. At the same time, good grid compatibility is guaranteed. Such a situation can be caused by a failure or defect of a rectifier 15a, 15b or an electrolysis module 23, so that one of the electrolysis series 3a, 3b, 3c, 3c must go to a standstill.

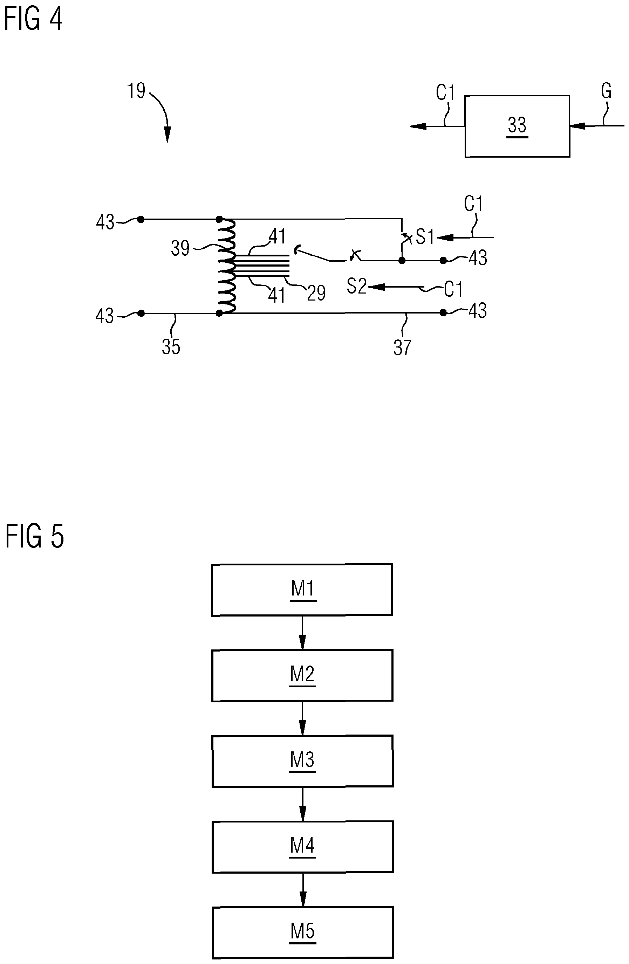

Particularly, for the present invention, also operational conditions that require a Low-Voltage-Ride-Through (LVRT) capability is ensured in the electrolysis plant 1, which is required from grid operators in case of a temporary voltage drop of the grid voltage. For this purpose, the electrolysis plant 1 is equipped with an enhanced LVRT surveillance and control system. The electrolysis plant 1 is enabled for Fault-Ride-Through capability during operation when being connected to the grid 11, the public grid 11 or an island grid 11 for instance. For this purpose, the electrolysis plant 1 comprises a control unit 33 with an interface to a grid stabilization equipment 31 that is designed to provide a grid voltage input-signal G to the control unit 33. The control unit 33 is enabled to provide a control signal C1 to the autotransformer 19 for controlling the AC-voltage output of the autotransformer 19 that is supplied to the Three-phase transformers 9, 11. The autotransformer 19 comprises a On-Load-Tap-Changer (OLTC) 29 whose tap position and secondary side AC voltage output is controlled accordingly. The improved and modified circuitry and control scheme with modified transformer design of autotransformer 19 including On-Load-Tap-Changer (OLTC) is shown in FIG 4 and discussed in detail below. This LVRT-compliant circuitry is enabled to cause an immediate through-connection of full available grid voltage accompanied with a fast increase of the AC voltage output of the transformer unit 21.

In addition, it is important to mention that the control unit 33 is also connected with the rectifier controller 17. The rectifier controller is arranged to process a control signal C2 received from the control unit 21, such that in case of an activation of the through-connection path accompanied with a fast increase of the AC voltage the rectifiers 15a, 15b are controlled and enabled to counteraction and regulation of the DC voltage provided to the electrolyser 3 for safe operational reasons.

In FIG 4 a circuitry of the modified autotransformer 19 with improved on-Load-Tap-Changer (OLTC) 29 is shown that is advantageously applied in the electrolysis plant 1 of FIG 3. The autotransformer 19 comprises a primary side 35 and a secondary side 37 that are equipped with terminals 43. At the primary side 35 the terminal 43 is arrange for an electrical connection to the AC grid 25 at the point of connection 27. At the secondary side 37 terminals 43 to the Three-phase transformers 9, 11 are provided (see also FIG 3). The autotransformer 19 comprises an On-Load Tap-Changer (OLTC) 29 with a plurality of taps 41. The autotransformer 19 uses a single winding for the primary side 35 and secondary side 37, making them simpler and more compact than traditional transformers. They are used in step-up and step-down configurations to increase or reduce AC voltage. The winding 39 of the autotransformer 19 is split at one point, which means that part of the winding 39 belongs to both the primary side 35 and the secondary side 37. By adjusting the taps 41, the ratio of the primary voltage to the secondary voltage and thus the AC output voltage can be changed. The taps 41 of the On-Load-Tap-Changer (OLTC) 29 can be selected by a tap switch S2. A bypass switch S1 is arranged in parallel to the tap switch S2 that is enabled to cause a through-connection of full available grid voltage supplied at the terminals 43 on the secondary side. Hence the full available AC grid voltage is furnished the primary side of the Three-phase transformers 9, 11, in case the bypass switch S1 is closed, whereas the tap switch S2 is opened or deactivated.

The tap switch S2 and the bypass switch S1 both are controllable switches and are arranged in a changeover circuitry, such that a commutation of current from the On-Load-Tap-Changer (OLTC) 29 to the through-connection path is implemented. By virtue of the control unit 33 the two switches S1, S2 can be controlled and operated respectively. The controllable dual-switch arrangement allows a Low-Voltage-Ride-Through (LVRT) capability of the electrolysis plant 1 through a modification of the On-Load-Tap-Changer (OLTC) 29 operational behaviour to comply with LVRT-requirements in case of a temporary voltage drop of the grid voltage. The tap switch S2 and the bypass switch S1 are fast-switching elements and comprise a fast-acting mechanical switch, a semiconductor switch or a combination of both. It can be advantageous that the tap switch S2 and/or bypass switch S1 comprises a vacuum circuit breaker (VCB) to perform the changeover switching within a few milliseconds only and without any interruption of the voltage and current supplied to the electrolyser 3.

In FIG 5 a simplified flowchart is depicted that illustrates a typical Low-Voltage-Ride Through (LVRT) sequence when the electrolysis plant 1, for instance correspondingly to the electrolysis plant shown in FIG 3 is operated. Particularly, when being connected to the public grid 25 the electrolysis plant 1 is capable for a safe and reliable Fault-Ride-Through operation and compliance with local grid code requirements. In general, the grid 25 may be implemented as a public grid 25 or an island or isolated grid 25 respectively. In normal operational mode of the electrolysis plant 1, the electrolysis plant 1 is connected to the grid 25 via the improved autotransformer 19 that is included in the transformer unit 21. Usually, a three phases medium voltage output at nominal grid frequency of 50 or 60 Hz is provided for example. The AC-Voltage initially received from the respective grid 25 and provided on the secondary side of the Three-phase transformers 9, 11 after transformation is supplied to the rectifier 15a, 15b via the AC-voltage input of the respective rectifier 15a, 15b. A typical Low-Voltage-Ride-Through (LVRT) sequence of the electrolysis plant 1 could look like this:
During normal operation the grid voltage is surveilled and recorded continuously. At step M1 of the method for operation of the electrolysis plant a voltage drop is recorded that is about 0.8 p.u. from rated grid voltage due to a distant fault in the grid 11. This implies that in step M2 the electrolysis DC current immediately drops, as the supply voltage is not sufficient to drive the electrolysis proceed anymore, see also polarization curve in FIG 2. Accordingly, in step M3, the grid stabilization equipment 31 detects the drop in the grid voltage and provides a respective grid voltage signal G to the control unit 33 as input signal. The control unit 33 reacts instantaneously by providing a control signal C1 to the autotransformer 19 including the On-Load-Tap-hanger (OLTC) 29 and the two switches S1, S2.

This implies that within 2 - 5 millisecond the bypass switch S1 is closed and the tap switch S2 is opened such that a through-connection of full available grid voltage at the terminals 43 to the primary side of the transformer 9, 11 is effectuated and electrolysis current maintained in order to keep the electrolyser 3 in operation. Hence, in case a voltage drop of the grid voltage is detected a Low-Voltage-Ride-Through (LVRT) operational mode is being immediately activated wherein the current path is switched over and commutated from tap switch S2 to bypass switch S1. Due to this commutation act full grid voltage supply is caused at the terminal 43 of the transformers 9, 11 and the electrolyser 3 can instantly resume hydrogen production. The electrolysis plant 1 is further able to consume active power during the fault, proportional to the available system voltage. In order to have this switching process and abrupt voltage increase controlled and temporally delayed or damped in step M4 the control unit 33 provides a control signal C1 to the rectifier controller 17 that is processed such that in case of an activation of the through-connection path that is accompanied with a fast increase of the AC voltage, the rectifier 15a, 15b is controlled and counteracts and the DC voltage provided to the electrolyser 3 is regulated. This can be easily obtained in anticipation of a fast voltage increase while the firing angles are increased in an electrical topology with thyristor-based rectifiers 15a, 15b. This can be implemented to a defined value such that the DC voltage provided to the electrolyser 3 is adapted accordingly.

The distant fault is cleared in step M5 and the supply voltage returns to its nominal value of about 100 p.u. In step M6 the control unit 33 receives a respective grid voltage signal G from the grid stabilization equipment 31 that indicates the return of the supply voltage. The control unit 33 provides a control signal C1 to the autotransformer 19 that deactivates or opens bypass-switch S1 and closes tap switch S2 again. The whole electrolysis plant 1 returns to nominal production. Thus, in case that after the temporary voltage drop the grid voltage returns the current path is switched over and commutated back from the bypass switch S1 to the tap switch S2 such that in the autotransformer 19 the On-Load-Tap-Changer 29 (OLTC) is operated again.

The basic concept of the operation an electrolysis plant can be briefly summarized as follows:
In steady state operation, e.g. in normal operation, the autotransformer 19 operates as planed and the additional connection via bypass switch S1 is disconnected. The tap switch S2 is closed. No influence on operation from the proposed modification is expected for this case.

In a fault scenario, however, in case the voltage level drops below the values for which the electrolyser 3 can operate at operating loading by using available its control reserve - like firing angle α for thyristor-based rectifier 15a, 15b or duty-cycle for Voltage-Source-Converter (VSC) - and a fault is detected, then the rectifier controller 17 will receive a control signal C2 about grid voltage from the control unit 33. The control unit 33 being programmed in such a way that it sends a "open" signal to the tap switch S2 and an "close" signal to the bypass switch S1 to ensure the commutation of the current from the On-Load-Tab-Changer (OLTC) 29 to the proposed current path. It is also possible in the control scheme of the invention that the rectifier controller 17 - after having received the control signal C2 from the control unit 33 - itself sends the control signal C1 to the tap switch S2. This is depending on the control hierarchy between the control unit 33 and the rectifier controller 17 and might be adapted for example to obtain preferably very fast response times for control and the commutation act in the overall scheme.

This is just an example and alternative solutions to the two switches S1 and S2, such as double vacuum circuit breakers (VCBs) can be applied as well. This way the normal tap positions are overridden, and the three-phase transformers 9, 11 directly get the full available network voltage level as input instantaneously. Even if this is a fast-switching event, thereby possibly resulting in fast increase of the voltage input of the rectifiers 15a, 15b, the respective rectifier controller 17 can counteract and correspondingly regulate the DC voltage within several milliseconds or even in parallel increase the firing-angle α in anticipation of the expected voltage increase to a pre-defined value or based on a characteristic voltage curve.

The technology which is applied for the electrochemical process in the electrolyser 3 may be based on a plurality of alkaline electrolysis cells and/or electrolysis cells having a proton exchange membrane, hereinafter referred to as PEM-cell, and /or an anion exchange membrane hereinafter referred to as AEM-cell, or solid oxide electrolysis cell. In the electrolysis plant 1 for the electrolyser 3 combinations of different types of electrolysers 3 and underlying electrolysis processes and cells are possible, e.g. hybrid electrolysis systems are included as well and that can be enabled now for performing a "FRT-Ready" operation accordingly.

## Claims

1. Electrolysis plant (1) comprising an electrolyser (3), a transformer unit (21) and a rectifier (15a, 15b), the transformer unit (21) comprises a transformer (9,11) and an autotransformer (19) with respective terminals (43) to the primary side (35) of the transformer (9, 11) and to the grid (25) for receiving power from the grid (25) to supply the electrolyser (3) with electrolysis current, whereby the autotransformer (19) comprises an On-Load-Tap-Changer (29) with a tap switch (S2) and whereby a bypass switch (S1) is arranged in parallel to the tap switch (S2) that is enabled to cause a through-connection of full available grid voltage at the terminals (43) to the primary side (35) of the transformer (9, 11) .

2. Electrolysis plant (1) according to claim 1, whereby the tap switch (S2) and the bypass switch (S1) are arranged in a changeover circuitry, such that a commutation of current from the On-Load-Tap-Changer (OLTC) 29 to the through-connection path is implemented.

3. Electrolysis plant (1) according to claim 1 or 2, comprising a control unit (33), wherein the control unit (33) is designed to control and operate each of the two switches (S1, S2) .

4. Electrolysis plant (1) according to claim 3, comprising an interface to a grid stabilization equipment (31) that is connected to the control unit (33) and that is enabled for surveillance of the grid voltage at the point of connection (POC) to the grid (25).

5. Electrolysis plant (1) according to claim 3 or 4, comprising a rectifier controller (17) that is connected to the control unit (33) and arranged to process a control signal from the control unit (33), such that in case of an activation of the through-connection path accompanied with a fast increase of the AC voltage the rectifier (15a, 15b) is controlled and enabled for counteraction and regulation of the DC voltage provided to the electrolyser (3).

6. Electrolysis plant (1) according to claim 5, wherein a control scheme is implemented in the rectifier controller (17) that is adapted to the respective grid voltage increase involved with an activation of the through-connection path.

7. Electrolysis plant (1) according to one of the preceding claims, whereby the tap switch (S2) and the bypass switch (51) comprise a fast-acting mechanical switch, a semiconductor switch or a combination of both.

8. Electrolysis plant (1) according to one of the preceding claims, whereby the tap switch (S2) and/or bypass switch (S1) comprises a vacuum circuit breaker (VCB).

9. Electrolysis plant (1) according to one of the preceding claims, wherein the rectifier (15a, 15b) is designed for enabling a bidirectional operational mode, particularly a multilevel-modular-converter (MMC) is provided, and the rectifier (5) being connected to the grid (25), such that voltage support can be achieved by providing reactive power to the grid (25) .

10. Method for operating an electrolysis plant (1) according to one of the preceding claims, wherein the electrolysis plant (1) is connected to a grid (25) by means of the transformer unit (21), wherein AC-voltage from said grid (25) is supplied to the rectifier (15a, 15b) via the AC-supply line (13a, 13b), and wherein during a temporary voltage drop of the grid voltage at the point of connection (POC) the electrolysis plant (1) stays connected, whereas the tap switch (S2) is opened and the bypass switch (S1) is closed such that a through-connection of full available grid voltage at the terminals (43) to the primary side (35) of the transformer (9, 11) is effectuated and electrolysis current maintained in order to keep the electrolyser (3) in operation.

11. Method according to claim 10, wherein in case a voltage drop of the grid voltage is detected a Low-Voltage-Ride-Through (LVRT) operational mode is being activated wherein the current path is switched over and commutated from tap switch (S2) to bypass switch (S1).

12. Method according to claim 10 or 11, wherein the control unit (33) provides a control signal (C2) to the rectifier controller (17) that is processed such that in case of an activation of the through-connection path that is accompanied with a fast increase of the AC voltage, the rectifier (15a, 15b) is controlled and counteracts and the DC voltage provided to the electrolyser (3) is regulated.

13. Method according to claim 12, wherein in anticipation of a fast voltage increase the firing angles (α) are increased in a thyristor-based rectifier (15a, 15b) to a defined value such that the DC voltage provided to the electrolyser (3) is adapted.

14. Method according to one of the claims 10 to 13, wherein in case after a voltage drop the grid voltage returns the current path is switched over and commutated back from the bypass switch (S1) to the tap switch (S2) such that in the autotransformer (19) the On-Load-Tap-Changer 29 (OLTC) is operated again.
